# EUROPEAN PATENT APPLICATION

(11) **EP 4 484 893 A1**
(43) Date of publication of application: **01.01.2025**
(21) Application number: 23182551.4
(22) Date of filing: 29.06.2023
(51) Int. Cl.: G01C 21/20, A61H 3/06, G01C 21/00, G05D 1/02

(54) **METHOD, DEVICE AND SYSTEM FOR OBJECT DETECTION FOR VISUALLY IMPAIRED PERSONS**

(71) Applicant: Deutsche Telekom AG, 53113 Bonn (DE)
(72) Inventor: KIM, Ju Hoon, Dr., 14947 Nuthe-Urstromtal (DE)
(74) Representative: Blumbach · Zinngrebe Patentanwälte PartG mbB

(57) **Abstract**

A method for object detection is proposed, comprising the steps of repeatedly determining obstacle location information of at least one obstacle (310) within a predetermined spatial area using at least one monitoring device (210, 220, 250), wirelessly transmitting the determined obstacle location information from the at least one monitoring device (210, 220, 250)to a central control device (200), wirelessly transmitting the determined obstacle location information and/or information derived from the determined obstacle location information from the central control device (200) to a mobile communication device (110, 120) determining location information of the mobile communication device (110, 120), detecting, by the mobile communication device (110, 120), that the mobile communication device (110, 120) approaches an obstacle (310), and notifying the user (100) in response to detecting that the mobile communication device (110, 120) approaches an obstacle (310).

Further, an object detection system (10), a mobile communication device (110, 120), a WLAN capable control device (200) and a robot household device (250) for performing the method are proposed.

## Description

The present invention is directed to a method for object detection and to respective devices and a system, which in particular can be used to notify a visually impaired person of obstacles in his or her environment.

### Background

House residents who are visually impaired or have a limited vision are prone to injury when there is an unaware item on the floor. Items within a house can be moved by pets, visitors, children, or moving home appliances to unexpected locations and thus become unaware.

There are known technologies that can help visually impaired people detect unaware objects and navigate around the objects, wherein an object recognition system that detects unaware items and obstacles on the floor and notifies the visually impaired house resident may help avoiding an accident by stepping or stumbling on those items. For example, object recognition systems are known, which use a camera that is coupled with a computer system and that provides sound feedback to the user. It is also known to use AR (Augmented Reality) technology, for example in the form of smart glasses, which also utilizes a camera and a specialized computer system. Further, RFID tags and a respective reader may be used, wherein a device that integrates the RFID reader can inform the user when the user approaches an object that has an RFID tag on it. Furthermore, it is known to measure the distance between the user and an object using an ultrasound sensor that can emit a high-frequency sound wave and detect the echo of the sound.

Existing object detection systems, however, are expensive and require the user to carry or wear an extra device for it, and/or are hard to manage.

### Summary of the Invention

It is an object of the present invention to provide an improved and/or simplified way for object detection, in particular in an indoor environment, which enables a person with impaired or reduced vision to detect unaware objects.

A core aspect of the invention can be seen in extending the functionality of already existing home appliances, such as a robot vacuum cleaner, of wearable devices, such as smartphones and smart watches, and of a WLAN capable home network system, to build a system for object detection that can be used by a visually impaired person to detect unaware objects and navigate around these objects. It is to be noted that in the following, the terms object and obstacle are used essentially synonymously, since any kind of object may be regarded as an obstacle for a visually impaired person.

The technical problem cited above is solved by the features of the independent claims. Preferred embodiments are set forth in the dependent claims.

Accordingly, a method is provided, which comprises the steps of
- repeatedly determining obstacle location information of at least one obstacle within a predetermined spatial area using at least one monitoring device,
- wirelessly transmitting the determined obstacle location information from the at least one monitoring device to a central control device,
- wirelessly transmitting the determined obstacle location information and/or information derived from the determined obstacle location information from the central control device to a mobile communication device of a user, said user moving within the predetermined spatial area, wherein the user in particular has a visual impairment,
- determining location information of the mobile communication device,
- detecting, by the mobile communication device, that the mobile communication device approaches an obstacle, depending on the determined location information of the mobile communication device and depending on the information received from the central control device,
- in response to detecting that the mobile communication device approaches an obstacle, notifying the user by the mobile communication device.

Depending on the determined obstacle location information preferably a digital map of obstacles for the predetermined spatial area may be generated or an already generated digital map may be updated, wherein generating and/or updating of said digital map may be performed either by the at least one monitoring device and/or by the central control device.

In a preferred embodiment, the central control device compares a current digital map of obstacles with a previously generated map of obstacles to determine difference information and transmits the difference information to the mobile communication device. For example, the central control device may repeatedly receive a digital map of obstacles within the predetermined spatial area from the at least one monitoring device and whenever it receives a digital map it compares it to the previously received map. By receiving the difference information, the mobile communication device in particular is enabled to identify moved and/or new obstacles.

The mobile communication device with advantage is a smartphone or a smart wearable device such as a smart watch, which is carried by the user. For performing the described functionality, on the mobile communication device preferably a respective software application, or short app, is installed, which may for example be provided in an app store. By extending the functionality of a device, which the user typically already carries at all times, with advantage, there is no need for an additional specialized device.

Preferably, also as monitoring devices such devices are used, which are already in use in a home environment.

In a preferred embodiment, a robot household device is used as a monitoring device, which moves within the predetermined spatial area, in particular a robot vacuum cleaner or a robot sweeping device. The robot household device preferably is provided with at least one sensor for detecting obstacles, wherein a typical robot household device used today is equipped with respective sensors by standard. Sensors that may be utilized in the robot household device for detecting obstacles comprise for example a camera, a radar unit, a Lidar (light detection and ranging) unit, a laser distance sensor (LDS), an ultrasonic sensor or an infrared sensor.

In another preferred embodiment, a WLAN capable device is used as a monitoring device, which is adapted to detect obstacles using wireless signals. A wireless LAN (WLAN) is a wireless computer network that links two or more devices using wireless communication to form a local area network (LAN) within a limited area such as a home. The WLAN capable device in particular is adapted for wireless communication using a communication protocol, which is based on the IEEE 802.11 standards. The WLAN capable device may also be referred to as a Wi-Fi device. Preferably, the monitoring device and the central control device are part of a home network, which is provided as a WLAN.

The WLAN capable device used as monitoring device preferably is adapted to detect obstacles within the predetermined spatial area using wireless signals, wherein the predetermined spatial area may be the user's home or part of it. For the purpose of object detection, the feedback on transmission quality that WLAN access points and WLAN end devices exchange with each other and store as channel state information (CSI) may preferably be utilized. This information normally is used to optimize transmission, but may also be used to detect objects and topologies, thus creating a virtual three-dimensional image or map of the environment. Preferably, a WLAN access point may be used as a monitoring device. It is however to be noted that also any other WLAN capable device may in principle be utilized for this purpose, such as for example an intelligent loudspeaker or any other kind of WLAN capable smart home device.

Accordingly, also the central control device with advantage is a WLAN capable device, in particular a wireless home router. A wireless home router is a device that performs the functions of a router and also includes the functions of a wireless access point and is used to provide access to a private computer network. The central control device may also be a residential gateway, which also enables access to the Internet. Furthermore, the central control device with advantage may be a device that is connectable to a WLAN capable device such as a wireless router or residential gateway.

In a preferred embodiment the central control device is a modular and/or programmable home router, for which a service or a software application is provided, wherein by installing said service or software application on the home router the functionality of the home router is extended, thereby enabling the home router to be employed for performing the described method.

Since the method typically is used in an indoor environment, GNSS (global navigation satellite system) based positioning typically is not available. Therefore, the location of the mobile communication device preferably is determined by the mobile communication device by means of an indoor positioning system, in particular using Wi-Fi signals, Bluetooth Low Energy signals and/or ultra-wideband signals.

When the mobile communication device detects that the mobile communication device approaches an obstacle, the user preferably is notified by the mobile communication device by means of a sound output, a voice output and/or by vibration of the mobile communication device, so that a visually impaired user who is unware of the obstacle is warned and may navigate around the obstacle.

According to another aspect, a mobile communication device is provided, which is adapted to determine location information of the mobile communication device, to receive obstacle location information from a central control device, to detect that the mobile communication device approaches an obstacle depending on determined location information of the mobile communication device and depending on information received from the central control device, and to notify a user in response to detecting that the mobile communication device approaches an obstacle.

According to a further aspect, a WLAN capable control device is provided, which is adapted to receive obstacle location information of at least one obstacle within a predetermined spatial area from at least one monitoring device by means of wireless communication, to transmit the received obstacle location information and/or information derived from the received obstacle location information to a mobile communication device of a user.

According to another aspect, a robot household device is provided, which comprises at least one sensor for detecting obstacles within a predetermined spatial area, a communication interface for wirelessly communicating with a WLAN capable control device as described above, wherein the robot household device is adapted to repeatedly determine obstacle location information of at least one obstacle within the predetermined spatial area using the at least one sensor, and to wirelessly transmit the determined obstacle location information to the central control device.

Preferably, the robot household device is adapted to generate and/or update a digital map of obstacles for the predetermined spatial area depending on determined obstacle location information, and to transmit the digital map to the central control device.

According to another aspect an object detection system is provided, which comprises a WLAN capable central control device as described above, a mobile communication device as described above, and at least one monitoring device, said at least one monitoring device comprising at least one sensor for detecting obstacles within a predetermined spatial area and a communication interface for wirelessly communicating with the WLAN capable control device, wherein the monitoring device is adapted to repeatedly determine obstacle location information of at least one obstacle within the predetermined spatial area using the at least one sensor, and to wirelessly transmit the determined obstacle location information to the WLAN capable central control device.

It is to be noted that the system and devices described above preferably are adapted for performing the above-described method, wherein accordingly the system and devices described above may for this purpose with advantage be respectively configured to perform any aspect described above with respect to the method.

### Brief Description of the Drawings

The invention is described in detail below by way of preferred embodiments in connection with the accompanying drawings, wherein
- Figure 1: schematically shows a preferred, but exemplary object detection system, which is adapted to perform the inventive method, and
- Figure 2: schematically shows an exemplary flowchart of the communication between the devices involved in a preferred embodiment of the method.

### Detailed Description of exemplary Embodiments

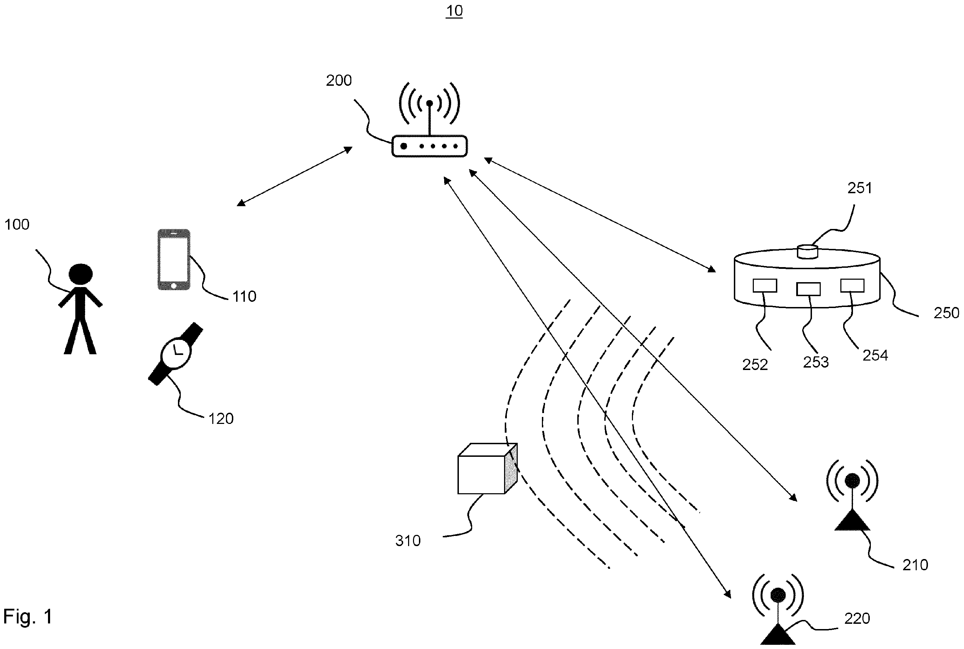

Referring now to figure 1, an exemplary object detection system 10 is schematically depicted.

In the shown exemplary embodiment, the system comprises a WLAN capable home router 200 as a central control device, which is adapted to communicate wirelessly with a mobile communication device of a user 100. As examples for a mobile communication device, which may be used, a smartphone 110 and a smart watch 120 are shown in Fig. 1. The central control device 200 is also adapted to communicate wirelessly with at least one monitoring device, which is adapted to repeatedly determine obstacle location information of at least one obstacle within a predetermined spatial area. The predetermined spatial area may be the complete home environment of the user 100 or part thereof, as for example a selected room.

In the embodiment shown in Fig. 1 three exemplary monitoring devices 210, 220 and 250 are schematically shown, wherein devices 210 and 220 are WLAN access points of the user's wireless home network and device 250 is a robot vacuum cleaner adapted to move around in the predetermined spatial area. In the shown embodiment, the robot vacuum cleaner 250 comprises a Lidar sensor 251, an ultrasonic sensor 252 and a camera 253 for detecting an obstacle 310, and a communication interface 254 for wirelessly communicating with the central control device 200.

The WLAN access points 210 and 220 are adapted for detecting objects using wireless signals, in particular the wireless signals that are also utilized for wirelessly communicating with the central control device 200. Preferably, for detecting objects by means of wireless signals, WLAN sensing or Wi-Fi sensing is employed, for which currently a standardization project IEEE 802.1 1bf is in progress.

In the following, the working principle of the object detection system 10 shown in Fig. 1 is exemplarily described.

In a first step a space, i.e. the predetermined spatial area or a part thereof, is scanned for objects with robot vacuum cleaner 250 and Wi-Fi access points 210 and 220. The scanning is symbolically depicted in Fig. 1 by dashed lines. The Wi-Fi technology and the technology of robot household devices, in particular robot vacuum cleaners and robot sweeping devices, are commonly used within a household and have capabilities to detect the location of objects in a living space.

The robot vacuum cleaner 250 scans the room space to identify objects such as furniture or walls. For this, the robot cleaner 250 may use various obstacle detection methods, for example, by using sensors, lasers, and cameras, such as Lidar sensor 251, ultrasonic sensor 252 and camera 253 shown in Fig. 1.

Using Wi-Fi as an object detector is not commonly used within a household yet, but it is a feasible option. Basically, the presence of an object can be detected by measuring the power level and the time delay of signal sent/received by Wi-Fi Tx/Rx modules such as Wi-Fi access points (AP) 210 and 220, wherein this information indicates the distance between the object 310 and the respective Wi-Fi Access Point 210 or 220, respectively.

Since the Wi-Fi access points 210 and 220 typically have a fixed location, the Wi-Fi-based object detection capability of access points 210 and 220 is static, resulting in objects, which are located behind another object or a wall with respect to the respective access point, cannot be detected, while the robot vacuum cleaner 250 can actively scan essentially every location of the living space and thus can with advantage supplement an object map generated by the Wi-Fi access points 210 and 220.

Accordingly, in an advantageous embodiment, each of the monitoring devices generates an object map, preferably in regular time intervals or in response to encountering an object in case of a moving monitoring device such as robot vacuum cleaner 250, and transmits the map to the central control device, in the embodiment shown in Fig. 1 to home router 200. The central control device combines the received maps, thus generating a combined map, which is then compared to a previously generated combined map and difference information is transmitted to the mobile communication device, such as smartphone 110 or smart watch 120.

The central control device 200 preferably is a modular and/or programmable home router.

The home router with advantage is provided with an additional functionality as compared to a home router known from the prior art. In particular, the home router 200 is adapted to collect maps of a room space from at least one monitoring device such as robot vacuum cleaner 250 and/or Wi-Fi access points (AP) 210 and 220, wherein said collected maps preferably comprise 3-dimensional coordinates of objects, which have been detected by the respective monitoring device. Object coordinates may comprise point coordinates and/or edge coordinates and/or coordinates defining a location and/or orientation of a 3-dimensional shape. The home router 200 further preferably is adapted to combine maps collected or received from different monitoring devices, wherein combining maps may comprise performing a coordinate transformation into a common coordinate system. Furthermore, the home router 200 with advantage is adapted to compare a current map and a previous map of a room space in order to detect moved or new obstacles in the room space. The home router 200 is further adapted to transmit, based on the result of the map comparison, respective update information to a mobile communication device, which is compliant with this service, such as smartphone 110 or smart watch 120, wherein for compliance the mobile communication device is provided with a software application adapted to process received update information and use this information, for example for notifying a user of the mobile communication device of newly appeared objects in the room space or for notifying the user, when an object is approached, for which location information has been received within the update information.

The above-described extended functionality of the modular and/or programmable home router 200 preferably is added to a home router known from the prior art by installing a respective service or application in the home router 200.

The mobile communication device is provided with location information on obstacles within a predetermined spatial area by the central control device, wherein the location information may be, for example, in the form of a map or in the form of a list of obstacles with corresponding coordinates.

The mobile communication device determines its location in regular intervals and checks whether an obstacle is approached, wherein for this purpose it is for example checked whether the distance to an obstacle falls below a predetermined threshold value. If it is detected that an obstacle is approached, the user is notified or alarmed by the mobile communication device by means of a sound output, a pre-recorded voice output or by vibration.

In order to determine a distance to an obstacle, for which the mobile communication device 110 or 120 has received location information from the central control device 200, the mobile communication device is adapted to determine its own location in regular intervals. For this purpose, the mobile communication device preferably is adapted to determine its own location by means of an indoor positioning system, in particular using Wi-Fi signals, Bluetooth Low Energy signals and/or ultra-wideband signals, since due to accuracy reasons, GPS typically must be avoided for indoor positioning of the mobile communication device. For Wi-Fi positioning using Wi-Fi signals the signal strength collected by multiple access points, for example access points 210 and 220, may be used to determine the exact position of the mobile communication device that the user 100 is carrying or wearing, for example smartphone 110 or smart watch 120.

Bluetooth Low Energy (BLE)is a technology similar to the Wi-Fi technology, wherein Bluetooth low energy beacons can be used to detect the indoor position of the mobile communication device accurately. Ultra-wideband (UWB) is a short-range wireless communication protocol that uses radio waves to precisely measure the distance between two devices, wherein UWB can be used to determine the exact location of a mobile communication device such as smartphone 110 or smart watch 120 within a few centimeters.

Summarizing, an object detection system 10 exemplary shown in Fig. 1 preferably is adapted to perform a method for object detection, comprising the steps of repeatedly determining obstacle location information of at least one obstacle 310 within a predetermined spatial area using at least one monitoring device 210, 220 and/or 250, wirelessly transmitting the determined obstacle location information from the at least one monitoring device 210, 220 and/or 250 to a central control device 200, wirelessly transmitting the determined obstacle location information and/or information derived from the determined obstacle location information from the central control device 200 to a mobile communication device of a user 100, said user 100 moving within the predetermined spatial area, wherein the user 100 in particular has a visual impairment.

The mobile communication device may for example be smartphone 110 or smart watch 120, wherein the method further comprises determining location information of the mobile communication device, in particular by the respective mobile communication device, detecting, by the mobile communication device, that the mobile communication device approaches an obstacle, for example obstacle 310, depending on the determined location information of the mobile communication device and depending on the information received from the central control device 200, and in response to detecting that the mobile communication device approaches an obstacle 310, notifying the user 100 by the mobile communication device.

It is to be noted that for performing the above-described method on the mobile communication device, i.e. for example on the smartphone 110 or on the smart watch 120, a respective application is installed.

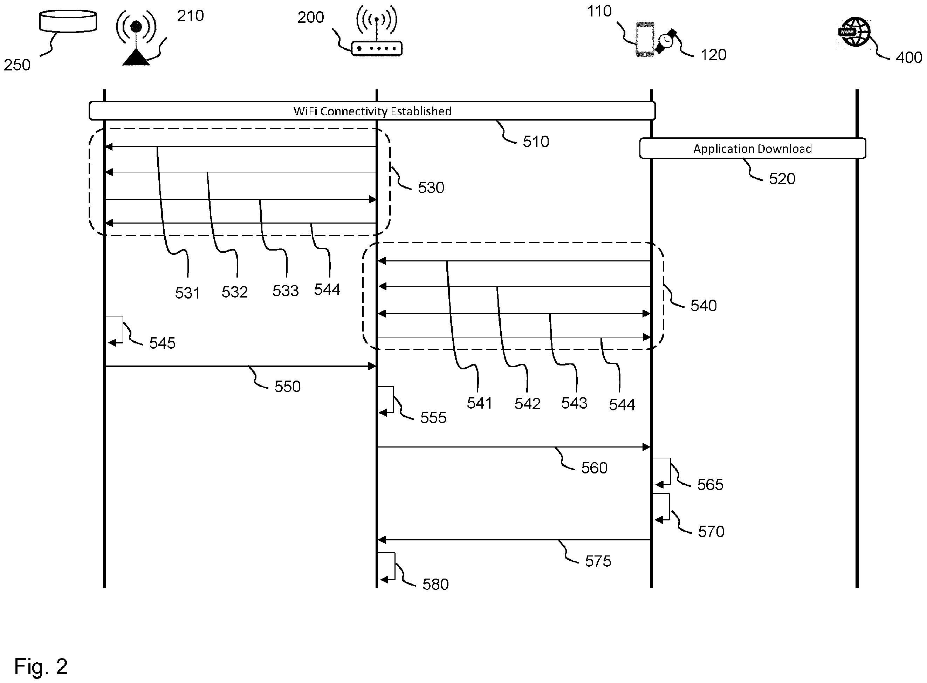

In the following the communication between the different devices, which takes place to perform the above-described method for object detection, is described in more detail with reference to Fig. 2.

In Fig. 2, an exemplary flowchart of the communication between the devices involved in a preferred embodiment of the method for object detection is schematically shown. In Fig. 2, exemplary devices are depicted, i.e. robot vacuum cleaner 250 and WLAN access point 210 as examples for a monitoring device, home router 200 as an example for the central control device, and smartphone 110 and smart wearable device 120 as examples for a mobile communication device.

In step 510, Wi-Fi connectivity is established between the central control device and the other devices, i.e. at least one monitoring device and at least one mobile communication device. As noted above, a specialized application is installed on the mobile communication device for performing the above-described method. This application may for example be downloaded from the Internet 400 in step 520.

The central control device advantageously executes a specialized service application for performing the above-described method for object detection, which may be preinstalled, for example by the manufacturer of the central control device or by a telecommunications provider, or may be installed on the central control device by the user 100. The application installed on the mobile communication device is compliant with the service provided by the central control device.

Prior to starting the above-described method for object detection, preferably the at least one monitoring device and the at least one mobile communication device are respectively registered on the central control device.

The steps for registering a monitoring device are collectively indicated by reference numeral 530 in Fig. 2.

In step 531, the service capability of a monitoring device is scanned. Once a new device, such as for example robot vacuum cleaner 250 or Wi-Fi access point 210, is detected by the central control device, i.e. in the shown example the home router 200, the router's service function or its service controller scans whether or not the respective device has the required capability, i.e. is compliant with the service. The scanning process can be implemented for example by utilizing a specific network port or by utilizing a pre-defined uniform resource identifier (URI) with a RESTful API over HTTPS. A RESTful API is an interface that two computer systems use to exchange information securely over the Internet, wherein the acronym REST stands for Representational State Transfer and the acronym API stands for application programming interface.

If the router's service controller finds out that the newly detected monitoring device has the required service capability, the service controller in step 532 sends a message to the newly detected monitoring device to join the service. Again, the messaging process can be done via connecting/sending to a specific IP address and port, or via a RESTful API, e.g. by using a PUT message, over HTTPS to the service end-point.

In response, the monitoring device in step 533 transmits a registration request to the service controller, i.e. to the central control device. The registration request message may comprise device information of the monitoring device, such as device type, manufacture or serial number, and/or information on capabilities of the monitoring device, such as information on mobility, scanning frequency, compatibility or protocol version.

In step 534, the service controller of the central control device confirms the monitoring device's registration request, if the monitoring device is compatible with the service version provided by the service controller, or otherwise rejects the monitoring device's registration request.

The steps for registering a mobile communication device are collectively indicated by reference numeral 540 in Fig. 2.

In step 541, the user actively scans for the service controller within a home network using the mobile communication device with the application, which for example was downloaded in step 520 from a trusted store in the Internet. The scan may be performed using a specific network URI, for example via a RESTful API, e.g. by using a GET message, over HTTPS.

Once the application on the mobile communication device has found the service controller within the home network, it requests for a registration to the service in step 542. Advantageously, an optional authentication process for verifying legitimacy of the user may be performed in step 543. In step 544, the service controller of the central control device confirms or rejects the registration request of the mobile communication device.

Each registered monitoring device, e.g. robot vacuum cleaner 250 or Wi-Fi access point 210, periodically scans a predetermined spatial area and, if an obstacle is detected, determines obstacle location information of the detected obstacle, indicated in Fig. 2 by reference numeral 545.

In step 550, the respective monitoring device wirelessly transmits collected obstacle location information to the service controller of the central control device.

Depending on the obstacle location information received from at least one monitoring device, the service controller of the central control device in step 555 generates a digital map of obstacles for the predetermined spatial area or updates an already generated digital map. It is to be noted that also a monitoring device may generate and/or update a digital map of obstacles, wherein in that case respective map information is periodically transmitted from the monitoring device to the central control device. The service controller of the central control device may advantageously also assess, in step 555, the severity of the danger that might be caused by an obstacle or object, wherein for this assessment various parameters may be taken into account, such as position and/or shape of the obstacle, the occurrence history of the obstacle and/or whether the obstacle has newly occurred, and also information on user awareness of the obstacle, wherein awareness of an obstacle may be assumed, if the user in the past has already been notified of the respective obstacle. Depending on obstacle parameters such as those given above, preferably a danger level may be associated with the obstacle, for example in the form of a numerical value.

In step 560, the service controller of the central control device updates the application executed on the mobile communication device by wirelessly transmitting obstacle location information and/or information derived from obstacle location information to the mobile communication device, wherein said mobile communication device is carried by the user 100. Danger level values associated with respective obstacles are advantageously also transmitted to the mobile communication device.

In step 565, the application on the mobile communication device calculates the distance between an obstacle and the mobile communication device, preferably for each obstacle, for which the mobile communication device has received information. It is to be noted that for this purpose, the mobile communication device determines its own location by means of an indoor positioning system, wherein the location of the mobile communication device may preferably be determined in pre-determined time intervals or whenever obstacle distances are to be calculated.

Depending on the distance and optionally also depending on the danger level of an obstacle, the mobile communication device in step 570 notifies the user of the obstacle, for example by means of a sound output, an output of a recorded voice and/or by vibration. In particular, the user is notified or alarmed, when the mobile communication device detects that the mobile communication device approaches an obstacle. It is also conceivable that a type of notification or alarm is selected depending on the danger level of the respective obstacle.

In step 575, the mobile communication device reports an alarm history and a history of user movements back to the central control device, wherein the service controller of the central control device stores this information in the central control device in step 580. The stored alarm history and the stored history of user movements preferably is used for improving the assessment of the severity of the danger that might be caused by a respective obstacle, i.e. for determining danger levels associated with obstacles.

Preferably, for security purposes all message exchanges between involved devices are performed after an authentication has been performed, in particular an authentication according to the OAuth2.0 standard.

With advantage, steps 545 to 580 are only performed, if at least one monitoring device and at least one mobile communication device have successfully been registered for the service on the central control device.

If no monitoring device is registered, a registered mobile communication device may be informed accordingly by the central control device, so that the user may be notified that the service is currently not available.

## Claims

1. A method for object detection, comprising the steps of
- repeatedly determining obstacle location information of at least one obstacle (310) within a predetermined spatial area using at least one monitoring device (210, 220, 250),
- wirelessly transmitting the determined obstacle location information from the at least one monitoring device (210, 220, 250) to a central control device (200),
- wirelessly transmitting the determined obstacle location information and/or information derived from the determined obstacle location information from the central control device (200) to a mobile communication device (110, 120) of a user (100), said user (100) moving within the predetermined spatial area, wherein the user (100) in particular has a visual impairment,
- determining location information of the mobile communication device (110, 120),
- detecting, by the mobile communication device (110, 120), that the mobile communication device (110, 120) approaches an obstacle (310), depending on the determined location information of the mobile communication device (110, 120) and depending on the information received from the central control device (200),
- in response to detecting that the mobile communication device (110, 120) approaches an obstacle (310), notifying the user (100) by the mobile communication device (110, 120).

2. The method of claim 1, wherein depending on the determined obstacle location information a digital map of obstacles for the predetermined spatial area is generated or updated by the at least one monitoring device (210, 220, 250) and/or by the central control device (200).

3. The method of claim 1 or 2, wherein in the central control device (200) a current digital map of obstacles is compared with a previously generated map of obstacles to determine difference information, wherein said difference information is transmitted from the central control device (200) to the mobile communication device (110, 120), wherein by said difference information in particular moved and/or new obstacles are identifiable.

4. The method of any one of the preceding claims, wherein the mobile communication device (110, 120) is a smartphone (110) or a smart wearable device (120), which is carried by the user (100).

5. The method of any one of the preceding claims, wherein the at least one monitoring device (210, 220, 250) comprises
- a robot household device (250) moving within the predetermined spatial area, which is provided with at least one sensor (251, 252, 253) for detecting obstacles (310), and which is adapted to communicate wirelessly with the central control device, in particular a robot vacuum cleaner or a robot sweeping device,
- a WLAN capable device (210, 220), which is adapted to detect obstacles (310) using wireless signals, in particular a WLAN access point.

6. The method of any one of the preceding claims, wherein the central control device (200) is a WLAN capable device, in particular a WLAN home router.

7. The method of any one of the preceding claims, wherein the user (100) is notified by the mobile communication device (110, 120) by means of a sound output, a voice output and/or by vibration of the mobile communication device (110, 120).

8. The method of any one of the preceding claims, wherein the location of the mobile communication device (110, 120) is determined by the mobile communication device (110, 120) by means of an indoor positioning system, in particular using Wi-Fi signals, Bluetooth Low Energy signals and/or ultra-wideband signals.

9. A mobile communication device (110, 120), which is adapted
- to determine location information of the mobile communication device (110, 120),
- to receive obstacle location information from a central control device (200),
- to detect that the mobile communication device (100, 120) approaches an obstacle (310) depending on determined location information of the mobile communication device (110, 120) and depending on information received from the central control device (200), and
- to notify a user (100) in response to detecting that the mobile communication device (110, 120) approaches an obstacle (310).

10. A WLAN capable control device (200), in particular a modular and/or programmable home router, which is adapted
- to receive obstacle location information of at least one obstacle (310) within a predetermined spatial area from at least one monitoring device (210, 220, 250) by means of wireless communication,
- to transmit the received obstacle location information and/or information derived from the received obstacle location information to a mobile communication device (110, 120) of a user (100).

11. A robot household device (250), in particular a robot vacuum cleaner or a robot sweeping device, comprising
- at least one sensor (251, 252, 253) for detecting obstacles (310) within a predetermined spatial area,
- a communication interface (254) for wirelessly communicating with a WLAN capable control device (200) according to claim 10,
wherein the robot household device (250) is adapted
- to repeatedly determine obstacle location information of at least one obstacle (310) within the predetermined spatial area using the at least one sensor (251, 252, 253), and
- to wirelessly transmit the determined obstacle location information to the central control device (200).

12. The robot household device of claim 12, adapted to generate and/or update a digital map of obstacles for the predetermined spatial area depending on determined obstacle location information, and to transmit the digital map to the central control device (200).

13. An object detection system (10), comprising
- a WLAN capable central control device (200) according to claim 10,
- at least one monitoring device (210, 220, 250), comprising at least one sensor for detecting obstacles (310) within a predetermined spatial area and a communication interface for wirelessly communicating with the WLAN capable control device (200), wherein the monitoring device (210, 220, 250) is adapted
- to repeatedly determine obstacle location information of at least one obstacle (310) within the predetermined spatial area using the at least one sensor, and
- to wirelessly transmit the determined obstacle location information to the WLAN capable central control device (200), and
- a mobile communication device (110, 120) according to claim 9.
